# EUROPEAN PATENT APPLICATION

(11) **EP 4 496 348 A1**
(43) Date of publication of application: **22.01.2025**
(21) Application number: 24187762.0
(22) Date of filing: 10.07.2024
(51) Int. Cl.: H04R 3/00, H04R 5/02

(54) **BODILY-SENSIBLE ACOUSTIC DEVICE**

(30) Priority: 19.07.2023 JP 2023117348
(71) Applicant: Alps Alpine Co., Ltd., Ota-ku, Tokyo 145-8501 (JP)
(72) Inventor: Ito, Ryo, Iwaki-city, Fukushima (JP)
(74) Representative: Schmitt-Nilson Schraud Waibel Wohlfrom Patentanwälte Partnerschaft mbB

(57) **Abstract**

A bodily-sensible acoustic device includes an operation part, speaker, amplifier, vibrator, vibration driver, and gain setting part. The operation part is operated by a user. The speaker is arranged in a position that allows the user to hear a sound output from the speaker. The amplifier is configured to amplify an input audio signal at a first gain to output the amplified input audio signal. The vibrator is arranged in a position that enables vibrations of the vibrator to be transmitted to the user. The vibration driver is configured to vibrate the vibrator according to a signal obtained by amplifying the input audio signal at a second gain. The gain setting part is configured to set the first gain and the second gain according to an operation amount of the operation part, where the first gain and the second gain are set to have different gain characteristics.

## Description

The present invention relates to a bodily-sensible acoustic device that outputs sounds and vibrations to a user corresponding to audio signals.

Bodily-sensible acoustic devices have been known. The bodily-sensible acoustic devices convert a low-frequency component signal extracted from an audio signal into mechanical vibrations to allow a user to directly perceive the vibrations through bodily senses to enhance the experience as if it is a live performance, in addition to an acoustic effect achieved by an acoustic device that transmits musical sounds by air propagation, such as a speaker (see, for example, Japanese Unexamined Patent Application Publication No. 05-301542). In each bodily-sensible acoustic device, after adjusting a sound volume by a sound volume controller with respect to an input sound signal, the signal amplified by the amplifier is output from the speaker, as well as vibrating a bodily-sensible acoustic unit according to the signal obtained by amplifying the low-frequency component.

In the bodily-sensible acoustic device disclosed in JP05-301542A, the sound volume controller sets a sound volume with respect to the input acoustic signal. The sound volume is set in response to an operation of a user (a driver or passenger of a vehicle) and the sound volume is set according to a preference of each user.

When a set sound volume is changed, there is generally a difference between a degree of change in a bodily sensation level of the sound volume output from the speaker and a degree of change in a bodily sensation level of the vibrations of the bodily-sensible acoustic unit. Therefore, even if a user perceives that a balance between the bodily sensation level of the sound volume and the bodily sensation level of the vibrations is appropriate at a certain set sound volume, the balance of the bodily sensation levels, which the user has perceived to be appropriate, may be lost when the set sound volume is changed. Specifically, when the set sound volume at which the bodily sensation levels are perceived to be appropriate is lowered, the bodily sensation level of the vibrations of the bodily-sensible acoustic unit becomes too low, and a user hardly feels the vibrations. When the set sound volume is increased, conversely, the bodily sensation level of the vibrations of the bodily-sensible acoustic unit becomes too high, which may disturb a user.

An object of the present invention is to provide a bodily-sensible acoustic device that can maintain an appropriate relationship between a sound volume level and a vibration level when a sound volume is changed.

The present disclosure is directed to a bodily-sensible acoustic device according to the appended claims. Embodiments are disclosed in the depended claims.

According to one aspect of the present invention, a bodily-sensible acoustic device includes an operation part, a speaker, an amplifier, a vibrator, a vibration driver, and a gain setting part. The operation part is operated by a user. The speaker is arranged in a position that allows the user to hear a sound output from the speaker. The amplifier is configured to amplify an input audio signal at a first gain to output the amplified input audio signal. The vibrator is arranged in a position that enables vibrations of the vibrator to be transmitted to the user. The vibration driver is configured to vibrate the vibrator according to a signal obtained by amplifying the input audio signal at a second gain. The gain setting part is configured to set the first gain and the second gain according to an operation amount of the operation part, where the first gain and the second gain are set to have different gain characteristics.

Other objects and further features of the present invention will be apparent from the following detailed description when read in conjunction with the accompanying drawings, in which:
Fig. 1 is a view illustrating a configuration of one embodiment of the bodily-sensible acoustic device; and
Fig. 2 is an exemplary diagram depicting a correlation between an operation amount of an operation part and each of a gain of an amplifier and a gain of a vibrating element driver.

A bodily-sensible acoustic space with sounds and vibrations can be achieved by outputting sounds corresponding to audio signals from a speaker and generating corresponding vibrations by a vibrator. Particularly, by varying a gain for setting a sound volume of a speaker and a gain for setting a vibration level of a vibrator, a balance of bodily sensation levels is maintained so that a suitable relationship between a sound volume level and a vibration level can be maintained when a sound volume is changed.

The gain setting part preferably includes a first gain setting part and a second gain setting part. The first gain setting part is configured to set the first gain corresponding to the operation amount. The second gain setting part is configured to set the second gain corresponding to the operation amount. When the operation amount is changed, the second gain setting part sets a change in the second gain to be smaller than a change in the first gain. Thus, a significant reduction in a vibration level of a vibrator is avoided when the sound volume of the sound output from a speaker is lowered, and conversely, a significant increase in the vibration level of the vibrator can be avoided when the sound volume level of the output sound of the speaker is increased.

The vibrator is preferably disposed on a surface of a seat on which the user sits, or inside the seat, or both. Particularly, the vibrator is preferably disposed on a seating surface of the seat, or a backrest of the seat, or both. The speaker is preferably disposed on a surface of a headrest of a seat on which a user sits, or inside the headrest, or both. Since the speaker or the vibrator is provided with the seat on which a user sits, the user can use a bodily-sensible acoustic system, which utilizes sounds and vibration, by merely sitting on the seat without wearing any particular instrument.

Each of the first gain and the second gain is preferably in a proportional relationship with the operation amount, where a proportional constant of the first gain and a proportional constant of the second gain are set to be different from each other. Thus, incongruous feeling caused by an imbalance between the sound volume level and the vibration level is easily adjusted when the sound volume is changed.

Embodiments of the bodily-sensible acoustic device to which the present invention is applied will be described with reference to drawings hereinafter.

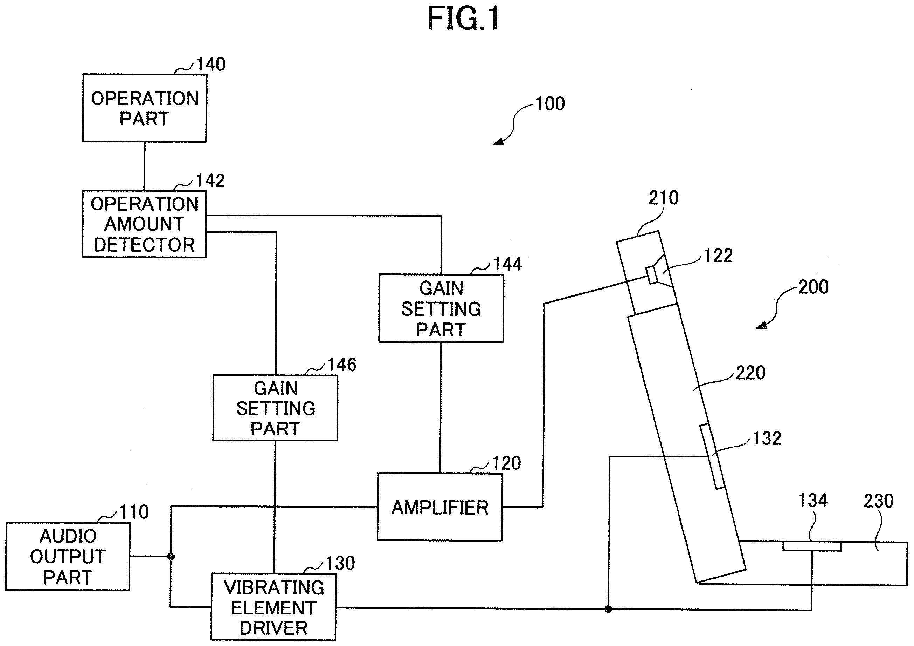

Fig. 1 is a view illustrating a configuration of one embodiment of the bodily-sensible acoustic device. As illustrated in Fig. 1, the bodily-sensible acoustic device 100 of the present embodiment includes an audio output part 110, an amplifier 120, a speaker 122, a vibrating element driver 130, vibrating elements 132 and 134, an operation part 140, an operation amount detector 142, and gain setting parts 144 and 146. The bodily-sensible acoustic device 100 is mounted in a vehicle so that a user (a driver or other passengers) can perceive sounds and vibrations, both corresponding to the audio sounds, through bodily senses.

The audio output part 110 outputs signals (audio signals) of music which a user desires to listen to. The music is not limited to particular types of music or sound, such as music or voices played by audio/video players, music or voices played by television sets, music or voices of streaming music/videos received by internet receivers, and the like. The music includes various sounds found in the natural world, such as sounds played by musical instruments including an acoustic range audible by a user, singing voices of humans, and the like.

The amplifier 120 amplifies the audio signal output from the audio output part 110 at a set gain (first gain) to output the amplified signal from the speaker 122. The speaker 122 is disposed in a position that is on a surface and/or inside of a headrest 210 of a seat 200 of a user and is close to ears of the user such that output audio sounds are easily perceived by a user. Preferably, two speakers 122 are used for left and right, respectively, so that the audio sounds separately reach the left ear and the right ear of the user.

The vibrating element driver 130 drives the vibrating elements 132 and 134 according to the signal obtained by amplifying the audio signal output from the audio output part 110 at a set gain (second gain) to vibrate the vibrating elements 132 and 134. The vibrating elements 132 and 134 are disposed on a surface of and/or inside the seat 200 of a user so that the generated vibrations can be easily perceived by the user through bodily senses. Specifically, one vibrating element 132 is disposed on the surface of and/or inside the backrest 220 of the seat 200 so that the generated vibrations are transmitted to the back of the user. The other vibrating element 134 is disposed on the surface of and/or inside the seating surface 230 of the seat 200 so that the generated vibrations are transmitted to the thighs of the user.

The operation part 140 is operated by a user to change a sound volume. The operation amount detector 142 detects an amount (operation amount) of the operation part 140 operated by the user. As the operation part 140 and the operation amount detector 142, any operation device and any detector may be used. For example, a rotation amount (rotation angle) of a rotating member may be detected as the operation amount in an analog or digital manner, or the number of times an up button and a down button are operated and an operation duration of the up button and the down button may be detected to determine the operation amount.

The gain setting part 144 sets a gain (first gain) of the amplifier 120 corresponding to the operation amount of the operation part 140 by a user, which is detected by the operation amount detector 142. Moreover, the gain setting part 146 sets a gain (second gain) of the vibrating element driver 130 corresponding to the operation amount of the operation part 140 by the user, which is detected by the operation amount detector 142. When the operation amount of the operation part 140 is changed, a change in the gain (second gain) of the vibrating element driver 130 is set to be smaller than a change in the gain (first gain) of the amplifier 120.

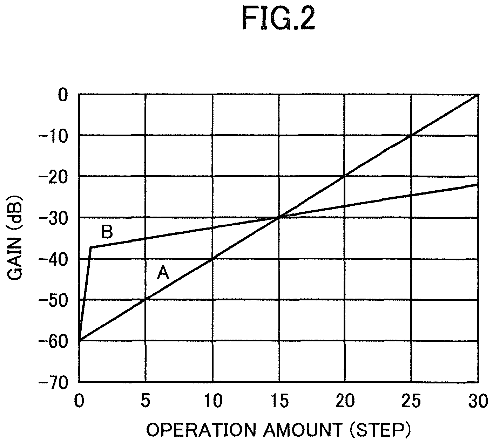

Fig. 2 is a diagram depicting a correlation between the operation amount of the operation part 140 and each of the gain of the amplifier 120 and the gain of the vibrating element driver 130 according to an embodiment. In Fig. 2, the horizontal axis indicates the operation amount represented by the number of steps, where the minimum operation amount is "0" steps, and the maximum operation amount is "30" steps, and the vertical axis indicates a gain in a unit of dB. Moreover, the reference symbol "A" represents the gain characteristics of the amplifier 120, and the reference symbol "B" represents the gain characteristics of the vibrating element driver 130.

As illustrated in Fig. 2, comparing between the gain A and the gain B when the number of steps as the operation amount is changed, the gain characteristics are set so that the change in the gain B of the vibrating element driver 130 is smaller than the change in the gain A of the amplifier 120. Specifically, each of the gain A and the gain B is a proportional relationship with the operation amount, and gain characteristics of the gain A and gain characteristics of the gain B are each realized by setting the proportional constant of the gain A and the proportional constant of the gain B at mutually different values. By setting the proportional constants in the above manner, incongruous feeling caused by an imbalance between the sound volume level and the vibration level is easily adjusted when the sound volume is changed.

In the example illustrated in Fig. 2, the gain A of the amplifier 120 and the gain B of the vibrating element driver 130 become the same value when the number of steps is 15. As the number of steps is reduced from 15, the gain A of the amplifier 120 is significantly reduced, whereas the degree of the reduction in the gain B of the vibrating element driver 130 is small. As the number of steps is increased from 15, the gain A of the amplifier 120 is significantly increased, whereas the degree of increase in the gain B of the vibrating element driver 130 is small.

Note that, the significant increase in the gain B observed when the number of steps is changed from 0 to 1 is due to the adjustment made to reduce a gain so that excessive vibrations do not occur in the state of step "0" where no operation is performed, and is not related to the gain setting in the present invention.

As described above, in the bodily-sensible acoustic device 100, sounds corresponding to an audio signal are output from the speaker 122 and corresponding vibrations are generated by the vibrating elements 132 and 134 so that a bodily-sensible acoustic space with sounds and vibrations can be realized. Particularly, by varying a gain (first gain) for setting a sound volume level of the speaker 122 and a gain (second gain) for setting a vibration level of the vibrating elements 132 and 134, the bodily sensation levels are adjusted so that a loss of balance between the sound volume level and the vibration level can be avoided, and a suitable balance between the sound volume level and the vibration level can be maintained when the sound volume is changed.

Thus, a significant reduction in a vibration level of the vibrating elements 132 and 134 is avoided when the sound volume of the sound output from the speaker 122 is lowered, and conversely, a significant increase in the vibration level of the vibrating elements 132 and 134 can be avoided when the sound volume level of the output sound of the speaker 122 is increased.

Since the speaker 122 or the vibrating elements 132 and 134 are provided with the seat 200 on which a user sits, the user can use a bodily-sensible acoustic system, which utilizes sounds and vibration, by merely sitting on the seat 200 without wearing any particular instrument.

The present invention is not limited to the above-described embodiments, and various modifications can be made within the scope of the present invention. In the above embodiments, the speaker 122 and the vibrating elements 132 and 134 are arranged in the seat 200 mounted in a vehicle, but the present invention can be also applied to a case where the speaker 122 is disposed in a seat used in a place other than a vehicle. Moreover, the present invention can be also applied to a case where audio sounds are audible through a headphone (in which a speaker is mounted), or a case where the vibrating element 132 and the like are held by a belt, clothes, or the like to be in contact with a body of a user.

As described above, according to aspects of the present invention, a bodily-sensible acoustic space with sounds and vibrations can be realized by outputting sounds corresponding to audio signals from a speaker, and generating corresponding vibrations by a vibrator. Particularly, by varying a gain for setting a sound volume level of a speaker and a gain for setting a vibration level of a vibrator, a loss of a balance between the bodily sensation levels can be avoided, and a suitable relationship between the sound volume level and the vibration level can be maintained when the sound volume is changed.

## Claims

1. A bodily-sensible acoustic device that is configured to output sounds and vibrations to a user according to audio signals, the bodily-sensible acoustic device comprising:
an operation part that is configured to be operated by a user;
a speaker arranged in a position that allows the user to hear a sound output from the speaker;
an amplifier configured to amplify an input audio signal at a first gain to output the amplified input audio signal;
a vibrator arranged in a position that enables vibrations of the vibrator to be transmitted to the user;
a vibration driver configured to vibrate the vibrator according to a signal obtained by amplifying the input audio signal at a second gain; and
a gain setting part configured to set the first gain and the second gain according to an operation amount of the operation part, where the first gain and the second gain are set to have different gain characteristics.

2. The bodily-sensible acoustic device according to claim 1,
wherein the gain setting part includes
a first gain setting part configured to set the first gain corresponding to the operation amount, and
a second gain setting part configured to set the second gain corresponding to the operation amount, where, when the operation amount is changed, the second gain setting part sets a change in the second gain to be smaller than a change in the first gain.

3. The bodily-sensible acoustic device according to claim 1 or 2,
wherein the vibrator is disposed on a surface of a seat on which the user sits, or inside the seat, or both.

4. The bodily-sensible acoustic device according to claim 3,
wherein the vibrator is disposed on a seating surface of the seat, or a backrest of the seat, or both.

5. The bodily-sensible acoustic device according to one of claims 1 to 4,
wherein the speaker is disposed on a surface of a headrest of a seat on which the user sits, or inside the headrest, or both.

6. The bodily-sensible acoustic device according to one of claims 1 to 5,
wherein each of the first gain and the second gain is in a proportional relationship with the operation amount, where a proportional constant of the first gain and a proportional constant of the second gain are set to be different from each other.
